# EUROPEAN PATENT SPECIFICATION

(11) **EP 0 850 373 B1**
(45) Date of publication and mention of the grant of the patent: **23.04.2003**
(21) Application number: 96946159.9
(22) Date of filing: 04.10.1996
(51) Int. Cl.: F16J 15/32

(54) **A BRUSH SEAL WITH A FLEXIBLE FRONT PLATE**
BÜRSTENDICHTUNG MIT EINER BIEGSAMEN FRONTSCHEIBE
JOINT A BROSSE POURVU D'UNE PLAQUE AVANT FLEXIBLE

(30) Priority: 05.10.1995 US 4862 P
(43) Date of publication of application: 01.07.1998
(73) Proprietor: EG&G SEALOL, INC., Cranston Rhode Island 02920 (US)
(72) Inventor: BASU, Prithwish, Pawtucket, RI 02860 (US); SHORT, John, F., North Scituate, RI 02857 (US)
(74) Representative: Grünecker, August, Dipl.-Ing.
(86) International application number: US9616024
(87) International publication number: WO97014897

(56) References cited:
- EP-A- 0 617 216
- WO-A-92/14951
- US-A- 5 335 920
- US-A- 5 568 931

## Description

### Technical Field

The present invention relates to brush seals for sealing high pressure fluid areas from low pressure fluid areas, the sealed fluid being a gas or a liquid.

### Background Art

Over the last decade, brush seals have emerged as a very promising technology for sealing high pressure areas from low pressure areas, such as those found in gas turbine engines.

Typically, brush seals inhibit flow of a gas (or liquid) in a stream along a shaft. The gas (or liquid) is sealed, for example, within a machine housing which has a system pressure. The outside area of the machine housing, toward which the gas (or liquid) will tend to leak, has a discharge pressure. The system pressure is greater than the discharge pressure, creating a lateral pressure differential. The system pressure side of the brush seal is referred to as the high pressure side, while the discharge pressure side of the brush seal is referred to as the low pressure side.

Conventional brush seals usually include an annular retaining plate, an annular back plate, and a plurality of flexible bristles secured between the annular retaining plate and the annular back plate. The plurality of flexible bristles, otherwise called a bristle pack, extend inwardly from bristle roots at an outer peripheral edge to free ends or tips. The tips of the plurality of flexible bristles run near to or contact the shaft to seal the system pressure from the discharge pressure.

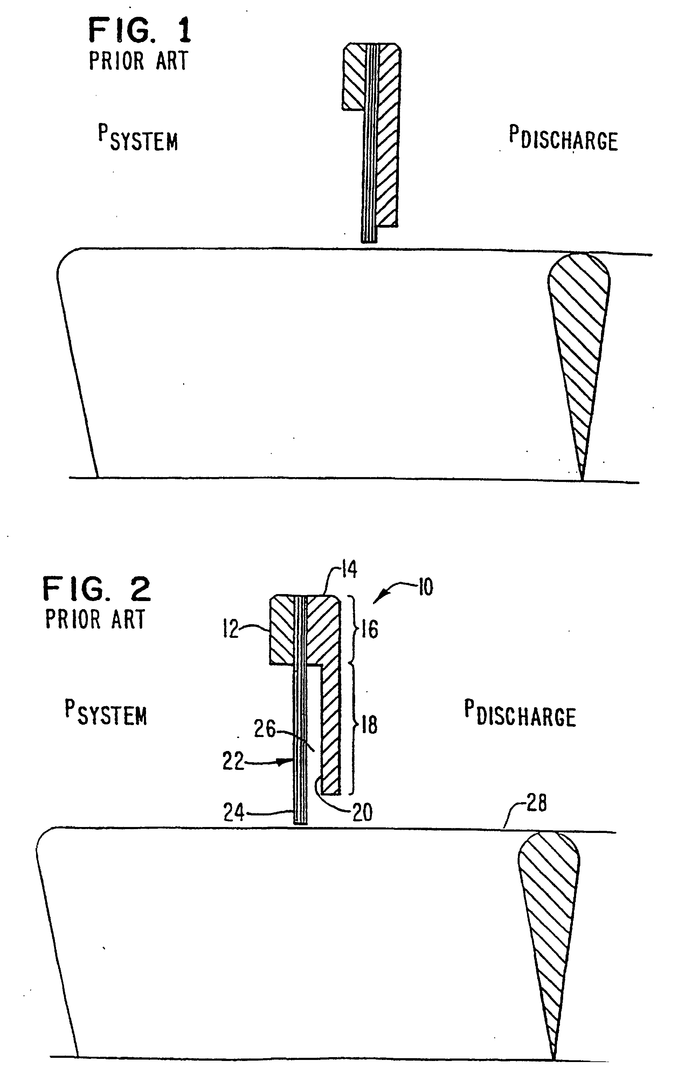

Prior art EP-A-0617216 (& US-A-5401216) relates to a brush seal according to the preamble of claim 1 and comprising a recessed back plate as illustrated at fig. 2 of the application.

Prior art US-A-5335920 relates to a so-called conventional brush seal comprised a non-recessed back plate as illustrated at fig. 1 of the application. In this seal the first upstream raws of bristles are made of thicker bristles than the remaining ones in order to reduce chamfering of the bristle pack caused by vibrations.

Prior art WO-A-92/14951 comprises two raws of bristles wherein the bristles of one raw are made shorter and of greater stiffness than the other ones.

As described in U.S. Patent 5,401,036 (the '036 patent), conventional brush seals exhibit "hysteresis" and "pressure stiffening" effects, which tend to adversely affect the seal performance and life. These effects are considerably attenuated, if not eliminated, by incorporating a "recessed back plate" described in the '036 patent.

A difficulty with the "recessed back plate" brush seal, however, is that it has a tendency to wear unevenly. The flexible bristles on the system pressure side tend to wear to a greater extent than the bristles on the discharge pressure side of the seal for reasons described in detail below. The present invention substantially overcomes this difficulty in the prior art.

### Disclosure of the Invention

In summary, to overcome the difficulties inherent in recessed back plate brush seals, the present invention provides a brush seal device according to claim 1.

It is noted that the present invention pertains to the recessed back plate brush seals and not conventional brush seals. In fact, the addition of a flexible front plate to a convention seal would reduce the efficiency of such a seal by increasing the hysteresis and pressure stiffening effects considerably, particularly at higher pressures. Without a recessed back plate, the bristle pack necessarily would be sandwiched between the flexible front plate and back plate under pressure and, thereby, the radial flexibility of the bristle pack would be appreciably reduced.

### Brief Description of the Drawings

The accompanying drawings, which are incorporated in and constitute a part of the specification, illustrate several embodiments of the invention, and, together with the general description given above and the detailed description of the embodiments given below, serve to explain the principles of the invention.

In the drawings:
Figure 1 depicts the cross-section of a conventional brush seal;
Figure 2 depicts the cross-section of a recessed back plate brush seal;
Figure 3 illustrates graphically the pressure profile in the lateral direction (along the shaft) through the tip region of the brush seal;
Figure 4 shows a representative radial flow pattern around a cross-section of an individual bristle in a brush seal;
Figure 5 is a front view of a portion of the bristle pack of a brush seal device;
Figure 6 is a radial cross-section of a brush seal device constructed in accordance with a first embodiment of the present invention;
Figure 7 is a partial sectional front view showing the radially slotted flexible front plate with fingers;
Figure 8 is a partial sectional front view showing angled fingers in the flexible front plate;
Figure 9 is a cross-section of a second embodiment of the present invention;
Figures 10(A)-(F) show several representative constructions of the contoured reeessed surface of the backplate; and
Figure 11 is a cross-sectional view of still a third embodiment of a brush seal made in accordance with the present invention, illustrating the inclusion of a protective front plate.

### Best Mode for Carrying Out the Invention

Before describing the embodiments of the present invention, it is first necessary to understand the forces at work that cause the brush seal to wear unevenly. The solution provided by the present invention can then be more fully appreciated.

In the typical brush seal, two forces act on the plurality of flexible bristles. A first force pushes the plurality of flexible bristles laterally (axially) toward the annular back plate. A second force pushes the plurality of flexible bristles radially toward the shaft. The first and second forces act orthogonally to one another.

Under steady state condition, there is usually a small annular gap (0.0508 - 0.127 mm (0.002 - 0.005 inches)) between the bristle tips and the shaft surface. This gap is known as the "tip region."

Flow of the gas (or liquid) from the system pressure to the discharge pressure through the tip region is referred to as a lateral (or axial) flow and is due to the lateral pressure differential across the brush seal. Radial flow of the gas (or liquid) over the plurality of bristles from the outer peripheral edge of the plurality of flexible bristles to the free ends is due to a radial pressure differential. That radial pressure differential is perpendicular to the lateral pressure differential and results in radial fluid flow.

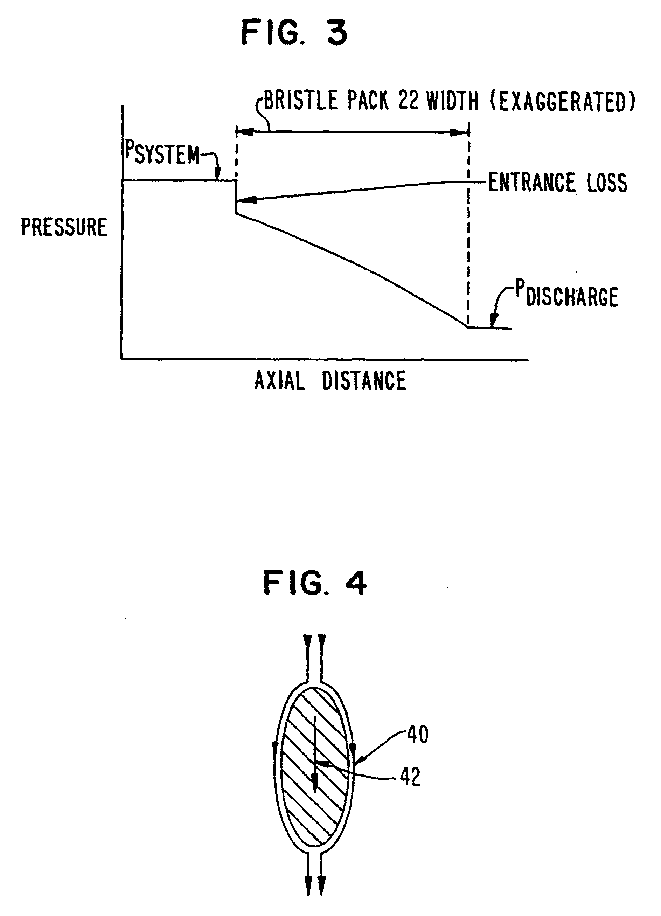

The radial pressure differential is more pronounced over the first several upstream rows of the bristles than the latter downstream rows. This is due to a loss in fluid pressure at the entrance of the bristle tip region, as depicted in Figure 3. The loss in fluid pressure at the entrance of the bristle tip region is known as "entrance loss." Since the pressure at the peripheral edge is greater than the pressure at the free ends of the plurality of flexible bristles due to the entrance loss, the fluid flows radially from the peripheral edge of the bristle pack toward the shaft. Figure 4 shows such a radial flow around a bristle. The cross-section shown in Figure 4 is elliptic, because it is taken in the radial direction.

The radial fluid flow exerts a radial force on the plurality of flexible bristles that pushes the bristles toward the shaft. The bristles on the high pressure side are subjected to a greater downward force than the bristles on the low pressure side because the radial pressure differential is greater on the high pressure side of the bristle pack than on the low pressure side. As a result, the bristles on the high pressure side tend to bend to a larger degree towards the shaft than the bristles on the low pressure side. This phenomenon has been observed in many brush seals in the laboratory with the help of an optical device called "borescope."

The effect of this second force on the bristles is called the "pressure closure effect." The pressure closure effect is responsible, at least in part, for the accelerated and uneven wear of brush seals. Because of this effect, the bristle tips feed themselves into the running shaft, resulting in accelerated wear. Furthermore, as mentioned, the pressure closure effect is greater on the high pressure side of the brush seal than the low pressure side because of the greater radial force on the bristles on the high pressure side of the bristle pack than the low pressure side. This disparity in the pressure closure effect across the bristle pack causes the bristles to wear unevenly. Uneven wear results in a shorter effective lifetime for the brush seal.

The pressure closure effect, however, is not the only cause of uneven wear that contributes to a reduced seal lifetime. The radial flow not only pushes the bristles toward the shaft, it also causes the bristles to vibrate. Bristles that vibrate are more likely to fail or break off due to fatigue and cyclic stress. The bristles on the high pressure side of the seal have a greater likelihood to fail or break because they are subject to a greater downward radial force and vibrate more vigorously. If the bristles on the high pressure side of the seal break off more frequently than the bristles on the low pressure side of the seal, the seal will wear unevenly. As discussed, uneven wear results in a shorter lifetime for the seal.

To overcome these difficulties, the present invention provides a flexible front plate with a plurality of fingers to sandwich the bristles between itself and a rigid back plate. The flexible front plate reduces the radial flow by reducing the exposure of the bristles to the gas (or liquid) at the system pressure. By reducing the radial flow, there is an appreciable decrease in: (1) the pressure closure effect and (2) bristle vibration. This has been verified experimentally in the laboratory.

Reference will now be made in detail to the preferred embodiments of the present invention, as illustrated in the accompanying drawings, in which like reference characters designated like or corresponding parts throughout the several figures of the drawings.

A recessed back plate brush seal 10, as disclosed by U.S. Patent No. 5,401,036, the disclosure of which is incorporated herein by reference, is illustrated in Figure 2 of the drawings. By its nature, brush seal 10 has a first side that faces a system pressure P_{system} and a second side that faces a discharge pressure P_{discharge}. Since system pressure P_{system} is greater than discharge pressure P_{discharge}, the first side of brush seal 10 is known as the high pressure side, while the second side is referred to as the low pressure side.

Brush seal 10 includes an annular retaining plate 12 with a first side facing system pressure P_{system} and a second side, opposite to the first side.

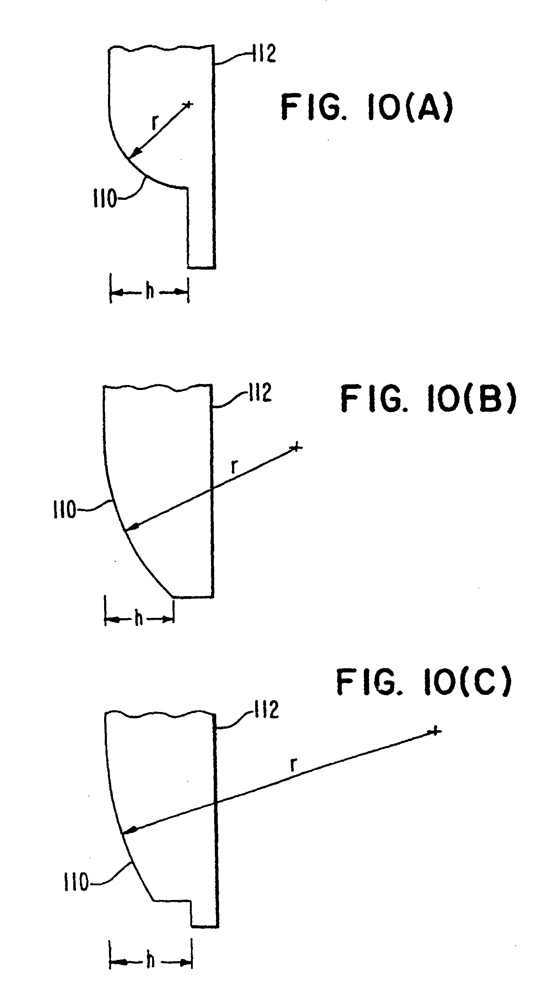

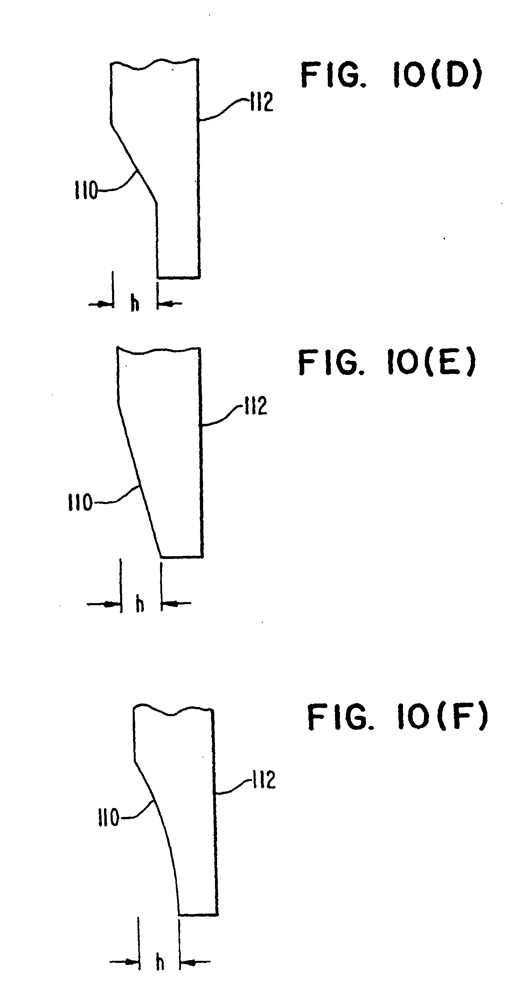

Brush seal 10 also includes an annular back plate 14 having a first side facing discharge pressure P_{discharge} and a second side, opposite to the first side. The second side of back plate 14 has an outer peripheral portion 16 and a radial inner peripheral portion 18. Inner peripheral portion 18 has a recessed surface 20 formed therein which reduces hysteresis as explained in the '036 patent. Recessed surface 20 may be substantially planar as shown in Fig. 2 or contoured as will be discussed in relation to Figures 10(A) through 10(F).

Additionally, brush seal 10 has a bristle pack 22, including a plurality of individual bristles 24, sandwiched between the second side of retaining plate 12 and the second side of back plate 14. Bristles 24 in bristle pack 22 can be secured between retaining plate 12 and annular back plate 14 by a weld (not shown) or by some other mechanism known in the art, depending on the material(s) used for retaining plate 12, bristles 24, and back plate 14. Since inner peripheral portion 18 of back plate 14 is thinner than outer peripheral portion 16, there is an axially extending gap 26 between bristle pack 22 and recessed surface 20 inner peripheral portion 18.

As mentioned earlier, during operation of any brush seal, there is a lateral and radial pressure differential across bristle pack 22. The lateral pressure drop imparts a lateral force on bristles 24 to push bristles 24 across the gap 26 toward recessed surface 20 of back plate 14.

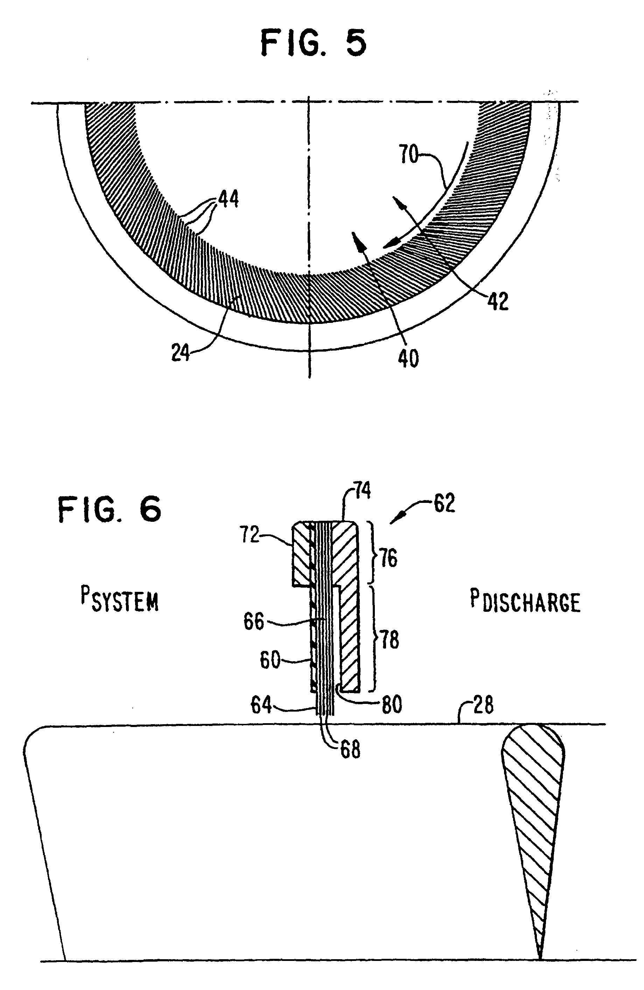

Also introduced earlier, in brush seal 10, the pressure of the fluid at the free ends of bristles 24 of bristle pack 22 is less than the pressure of the fluid at the peripheral portion. The lower pressure at the free ends of bristles 24 is due, in part, to fluid flow along shaft 28 past bristles 24 and the consequent entrance loss. As shown in Figures 4 and 5, the resulting radial pressure differential is responsible for a second fluid flow, a radial fluid flow 40 through bristle pack 22 radially from the peripheral portion toward the inner portion of bristle pack 22.

Radial fluid flow 40 results in a radial pressure drag 42 on bristles 24 which tends to push free ends 44 of bristles 24 toward shaft 28. This is known as the "pressure closure effect." Bristles 24 at the high pressure side of bristle pack 22 are subjected to the greatest magnitude of radial flow 40 and, therefore, are most strongly affected by it. As a result, not only does entire bristle pack 22 go through an accelerated wear process, but also bristles 24 on the high pressure side of bristle pack 22 wear more than bristles 24 on the low pressure side. The greater wear of bristles 24 on the high pressure side of bristle pack 22 causes bristle pack 22 to wear unevenly.

Additionally, radial flow 40, caused by the entrance loss, is great enough to cause bristles 24 to vibrate. This effect is so great on the high pressure side of bristle pack 22 that bristles 24 tend to vibrate wildly. Excessive vibration of bristles 24 increases the chances that bristles 24 may break due to fatigue and cyclic stress. This magnifies the problem of uneven wear of bristle pack 22.

The present invention solves, in part, the problem of the pressure closure effect and bristle vibration by providing a flexible front plate on the high pressure side of the bristle pack, as shown in Figure 6 by flexible front plate 60.

In the first embodiment of the present invention, a brush seal 62 is provided for sealing system pressure P_{system} from discharge pressure P_{discharge} having bristles 64 forming bristle pack 66. Bristles 64 extend from the peripheral portion, where the ends are fixed, to an inner portion, where the ends are free. Bristles 64 are disposed at an angle to the radial direction such that free ends 68 of bristles 64 point in the direction of rotation 70 of shaft 28, as shown in Figure 5.

To retain their shape, especially at higher temperatures, bristles 64 preferably comprise a high temperature nickel-based alloy such as Haynes 25® or Haynes 214® manufactured by Haynes International or ceramic materials such as silicon carbide. Of course, bristles 64 may comprise any suitable material for a particular application.

Brush seal 62 also includes annular retaining plate 72 and back plate 74, as previously described with regard to retaining plate 12 and back plate 14. Bristle pack 66 and flexible front plate 60 are sandwiched between retaining plate 72 and back plate 74. The second side of back plate 74 has an outer peripheral portion 76 and an inner peripheral portion 78. Inner peripheral portion 78 has a recessed surface 80.

Retaining plate 72 and back plate 74 can comprise a nickel based alloy such as Inconel® 625 or 718 manufactured by Inco Alloys International or Haynes 188, manufacturing by Haynes International. However, the composition of retaining plate 72 and back plate 74 can vary depending upon the particular environment in which the brush seal 62 is installed.

Preferably, retaining plate 72 and back plate 74 are configured so that the distance between the outer and inner peripheral edges of retaining plate 72 is substantially equal to the length of outer peripheral portion 76. Further, retaining plate 72 and outer peripheral portion 76 of back plate 74 should extend over only a small portion of bristles 64 at their outer peripheral edge.

Brush seal 62 is characterized by the inclusion of flexible front plate 60 with a plurality of fingers disposed between the second side of annular retaining plate 72 and the high pressure side of bristle pack 66. Flexible front plate 60 contacts or is disposed substantially close to the high pressure side of bristle pack 66.

Specifically, flexible front plate 60 may comprise Inconel 718® made by Inco Alloys International. Of course, any suitable material can be used, depending on the particular application, so long as flexible front plate 60 has a high enough strength to withstand the pressure and the dynamic loading.

Flexible front plate 60 preferably extends from the outer portion of brush seal 62 nearly to the inner diameter of the back plate 74. However, flexible front plate 60 can be fashioned to extend whatever distance is needed toward free ends 68 of bristles 64 to reduce the pressure closure effect and lessen the vibration of bristles 64 due to radial flow 40. The length to which flexible front plate 60 extends toward free ends 68 of bristle 64 depends on the particular application.

Flexible front plate 60 reduces the magnitude the effects of radial flow 40 by presenting a barrier between the fluid at system pressure P_{system} and the bristle pack 66. Flexible front plate 60 does this, however, without interfering with the operation of bristles 64 in bristle pack 66. If flexible front plate 60 does interfere, it does so only minimally.

With the addition of the flexible front plate 60, there is a considerable reduction in radial flow 40 and, hence, radial pressure drag 42, which result in a substantial reduction of the pressure closure effect. Moreover, a reduced radial flow 40 and radial pressure drag 42 result in a proportionally decreased tendency for bristles 64 to vibrate. A decrease in both the pressure closure effect and bristle 64 vibration reduces uneven wear on bristle pack 66. In all, flexible front plate 60 improves the operation of brush seal 62 and extends its life.

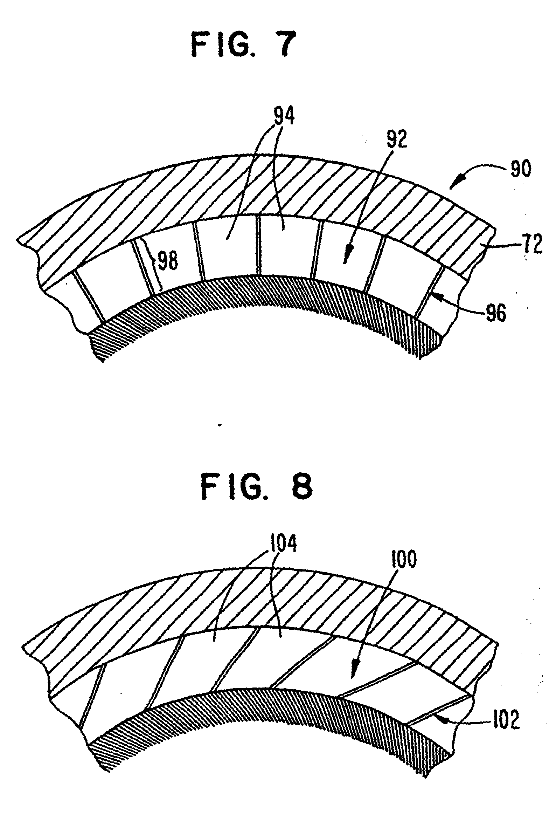

Details about the flexible front plate are illustrated in Figures 7 and 8. Brush seal 90 is provided in Figure 7 wherein a flexible front plate 92 defines a plurality of fingers 94. Fingers 94 are separated by slots 96 that extend a predetermined distance from the inner peripheral edge of flexible front plate 92 toward the inner peripheral edge of retaining plate 72.

Preferably, slots 96 extend radially from the inner peripheral edge of flexible front plate 92 to the inner peripheral edge of retaining plate 72 to provide fingers.94 with maximum flexibility. However, it is possible that slots 96 need not extend a full distance 98 from the inner peripheral edge of flexible front plate 92 to the inner peripheral edge of retaining plate 72 or extend beyond the full distance 98 for flexible front plate 92 to function sufficiently well to substantially reduce radial flow.

While the preferred orientation of the slots 96 is 0° to the radial direction, the slots alternatively may be disposed at an angle to the radial direction. As shown in Figure 8, flexible front plate 100 may have angled slots 102 that create angled fingers 104. Angled fingers 104 may be disposed preferably at an angle of ± 75° from the radial direction. Angled slots 102 may be preferred to radially oriented slots where the radial envelope is tight, i.e., where the radial distance between shaft 28 and the inner peripheral edge of retaining plate 72 is small. In such a case, angled slots 102 create angled fingers 104 with greater flexibility than those that would be created with radial slots 96.

For both radial and angled slots, fingers 94 and 104 should have a lateral flexibility that-is greater than the lateral flexibility of bristles 64 adjacent the respective fingers, so that the fingers follow bristle pack 66 without separation when pressure is applied. This will ensure blockage of radial flow.

It is further contemplated that the slots 96 or 102 are in the range of 101.6 µm (4 mil) to 304.8 µm (12mil) wide. Also, the fingers 94 or 104 are preferably in the range of 76.2 µm (3 mil) to 508 µm (20 mil) thick. More preferably, fingers 94 or 104 are contemplated to be in the range of 101.6 µm (4 mil) to 177.8 µm (7 mil) thick.

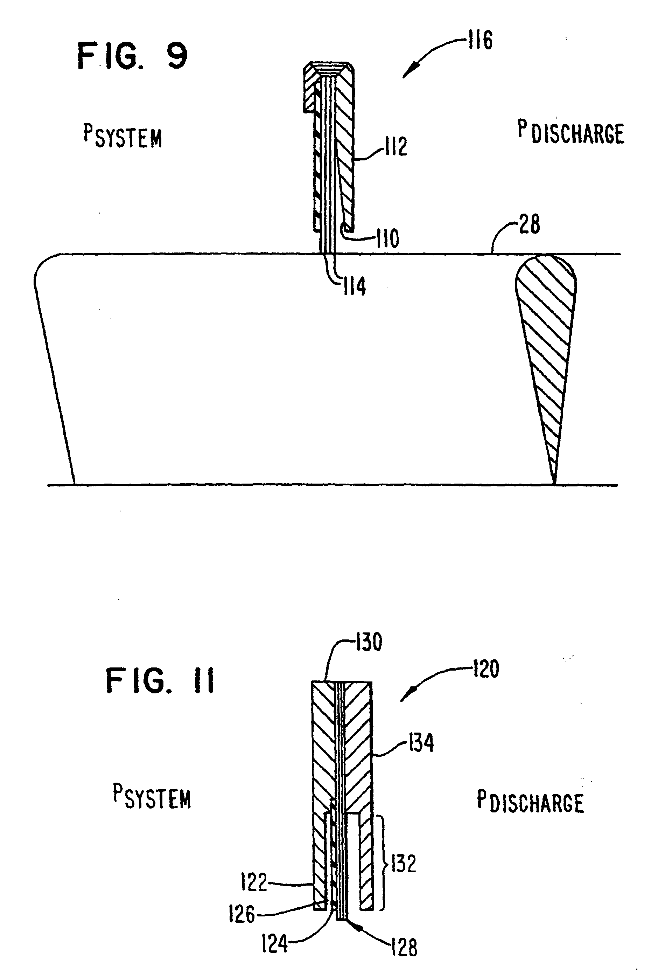

The second embodiment of the present invention is described in Figure 9. One difference between the first and the second embodiments is the inclusion of contoured recessed surface 110 for back plate 112. Figs. 10(A) through (F.) show several possible designs of the surface. Hence, depending on the shape of recessed surface 110, the gap between the bristle pack 64 and recessed surface 110 may be uniform or radially varying.

Figures 10(A), 10(B), and 10(C) illustrate several possible designs for the recessed surface 110. As shown, both the radius of curvature r of the contour at the bristle roots and the depth h of the recessed surface 110 at the inner peripheral edge of back plate 112 may vary. For example, the radius of curvature r of the contour at the bristle roots may vary between 0.- 50.8 mm (0 - 2 inches) and the depth h of the recessed surface 110 at the inner peripheral edge of the back plate 112 may vary from 0.127 mm - 3.048 mm (0.005 - 0.120 inch). It should be noted that the depth h is preferably chosen such that the bristles 114 barely touch the recessed surface 110 when at operating pressure.

By contouring the recessed surface 110 in this manner, reaction forces at the roots of the bristles 114 are not concentrated at a single point, but instead are spread over a finite region of the bristles, thereby reducing the maximum stress. Thus, the brush seal device 116 may accommodate higher pressure differentials.

Some other possible designs for the recessed surface 110 are shown in Figs. 10(D), 10(E) and 10(F).

The third embodiment of the present invention will be described in relation to Figure 11. In the third embodiment, brush seal 120 includes rigid front plate 122. Rigid front plate 122 is disposed a distance from flexible front plate 124, creating a gap 126 between rigid front plate 122 and flexible front plate 124.

Rigid front plate 122 is positioned in front of flexible front plate 124 to provide protection for flexible front plate 124 and bristle pack 128, especially during the handling and installation of brush seal 120 in a particular application. Rigid front plate 122 preferably extends from the inner peripheral edge of retaining plate 130 and is coextensive with inner peripheral portion 132 of back plate 134. However, as may be apparent, this is not required to practice the present invention.

In a preferred embodiment, it is contemplated that rigid front plate 122 be a part of retaining plate 130 as shown in Figure 11. However, rigid front plate 122 may be added as a plate that is separate from retaining plate 130. Accordingly, it is preferred that rigid front plate 122 be made of the same material as retaining plate 130 or back plate 134. As mentioned, this can be a nickel based alloy such as Inconel®. 625 or 718 manufactured by Inco Alloys International or Haynes 188, manufactured by Haynes International, but this is not required to practice the present invention.

Finally, brush seal 120 alternatively may include contoured recessed back plate 110 as shown in Figures 9 and 10.

It should be apparent from the foregoing discussion that the present invention provides for a brush seal device having improved characteristics over conventional or simple recessed back plate designs. In particular, the brush seal device of the present invention reduces the "pressure closure effect" associated with simple recessed back plate seals, thereby extending the life of the device and improving its pressure sealing capabilities.

## Claims

1. A brush seal device (62) for sealing a high pressure area (P_{SYSTEM}) from a low pressure area (P_{DISCHARGE}), the brush seal device (62) including a plurality of bristles (64) arranged annularly and an annular back plate (74) positioned concentric to and on the low pressure side (P_{DISCHARGE}) of the bristles (64), the back plate (74) having a recessed surface (80) adapted to delay contact of the bristles (64) with the back plate (74) upon application of pressure across the seal device (62), **characterized by**
a flexible annular front plate (60) positioned concentric to said bristles (64) and sufficiently close to said bristles (64) on the high pressure side (P_{SYSTEM}) to reduce fluid flow through said bristles (64).

2. The brush seal device (62) of claim 1, wherein said flexible front plate (92, 100) defines a plurality of fingers (94, 104).

3. The brush seal device (62) of claim 2, wherein the lateral flexibility of each said finger (94, 104) is greater than the lateral flexibility of a section of bristles (64) adjacent said finger (94, 104).

4. The brush seal device (62) of claim 2, wherein said fingers (94, 104) are formed by slots (96, 102) extending from the inner peripheral edge of said flexible front plate (92, 100).

5. The brush seal device (62) of claim 2, wherein said bristles (64) extend at an angle from a radial direction.

6. The brush seal device (62) of claim 2, wherein said fingers (94, 104) extend radially inward of said flexible annular front plate (92, 104).

7. The brush seal device (62) of claim 2, wherein said:fingers (104) extend inwardly of said annular front plate (100) at an angle from radial direction.

8. The brush seal device (62) of claim 7, wherein said angle is between +/- 75 degrees, a positive angle indicating the same direction as the bristles (64) and a negative angle indicating the opposite direction to the bristles (64).

9. The brush seal device (62) of claim 8, wherein said angle is approximately 0°.

10. The brush seal device (62) of claim 4, wherein said slots (96, 102) are in the range of 4 to 12 mils (0.1016 to 0.3048 mm) wide.

11. The brush seal device (62) of claim 4, wherein said fingers (94, 104) are in the range of 3 to 20 mils (0.0762 to 0.508 mm) thick.

12. The brush seal device (62) of claim 11, wherein said fingers (94, 104) are in the range of 4 to 7 mils thick (0.1016 to 0.1778 mm).

13. The brush seal device (62) of claim 1, wherein said seal device (62) includes a rigid annular front plate (122) positioned concentric to and on the high pressure side (P_{SYSTEM}) of said flexible annular front plate (124), said rigid front plate (122) having substantially the same internal diameter as said flexible annular front plate (124) and positioned sufficiently close to said flexible annular front plate (124) to afford protection thereof.

14. The brush seal device (62) of claim 1, wherein said recessed surface (80, 110) is for reducing a hysteresis effect on said back plate (74, 112), and said flexible annular front plate (60) is for reducing pressure closure of said bristles (64).

15. The brush seal device (62) of claim 1, wherein the recessed surface (80) is substantially planar.

16. The brush seal device (62) of claim 1, wherein the recessed surface (110) is contoured to increase in depth (h) toward an inner peripheral edge of said back plate (112).

## Patentansprüche

1. Bürstendichtungsvorrichtung (62) zum Abdichten eines Hochdruckbereiches (P_{SYSTEM}) gegenüber einem Niederdruckbereich (P_{DISCHARGE}), wobei die Bürstendichtungsvorrichtung (62) eine Vielzahl von Borsten (64) enthält, die ringförmig angeordnet sind und eine ringförmige Hinterplatte (74), die konzentrisch zu den Borsten (64) und an ihrer Niederdruckseite (P_{DISCHARGE}) positioniert ist, wobei die Hinterplatte (74) eine vertiefte Fläche (80) aufweist. die Kontakt der Borsten (64) mit der Hinterplatte (74) beim Wirken von Druck über die Dichtungsvorrichtung (62) verzögert, **gekennzeichnet durch:**
eine flexible ringförmige Vorderplatte (60), die konzentrisch zu den Borsten (64) und nahe genug an den Borsten (64) auf der Hochdruckseite (P_{SYSTEM}) positioniert ist, um Fluidstrom **durch** die Borsten (64) zu verringem.

2. Bürstendichtungsvorrichtung (62) nach Anspruch 1, wobei die flexible Vorderplatte (92, 100) eine Vielzahl von Fingem (94, 104) aufweist

3. Bürstendichtungsvorrichtung (62) nach Anspruch 2, wobei die seitliche Flexibilität jedes der Finger (94, 104) größer ist als die seitliche Flexibilität eines Abschnitts der Borsten (64), der an die Finger (94, 104) angrenzt.

4. Bürstendichtungsvorrichtung (62) nach Anspruch 2, wobei die Finger (94, 104) durch Schlitze (96, 102) gebildet werden, die sich vom Innenumfangsrand der flexiblen Vorderplatte (92, 100) aus erstrecken.

5. Bürstendichtungsvorrichtung (62) nach Anspruch 2, wobei sich die Borsten (64) in einem Winkel zu einer radialen Richtung erstrecken.

6. Bürstendichtungsvorrichtung (62) nach Anspruch 2, wobei sich die Finger (94, 104) radial einwärts der flexiblen ringförmigen Vorderplatte (92, 104) erstrecken.

7. Bürstendichtungsvorrichtung (62) nach Anspruch 2, wobei sich die Finger (104) einwärts der ringförmigen Vorderplatte (100) in einem Winkel zu radialer Richtung erstrecken.

8. Bürstendichtungsvorrichtung (62) nach Anspruch 7, wobei der Winkel zwischen +/- 75 Grad liegt und ein positiver Winkel die gleiche Richtung wie die der Borsten (64) anzeigt und ein negativer Winkel die zu den Borsten (64) entgegengesetzte Richtung anzeigt.

9. Bürstendichtungsvorrichtung (62) nach Anspruch 8, wobei der Winkel ungefähr 0° beträgt.

10. Bürstendichtungsvorrichtung (62) nach Anspruch 4, wobei die Schlitze (96, 102) im Bereich von 4 bis 12 Milliinch (0,1016 bis 0,3048 mm) breit sind.

11. Bürstendichtungsvorrichtung (62) nach Anspruch 4, wobei die Finger (94, 104) im Bereich vom 3 bis 20 Milliinch (0,0762 bis 0,508 mm) dick sind.

12. Bürstendichtungsvorrichtung (62) nach Anspruch 11, wobei die Finger (94, 104) im Bereich von 4 bis 7 Milliinch (0,1016 bis 0,1778 mm) dick sind.

13. Bürstendichtungsvorrichtung (62) nach Anspruch 1, wobei die Dichtungsvorrichtung (62) eine starre ringförmige Vorderplatte (122) enthält, die konzentrisch zu der flexiblen ringförmigen Vorderplatte (124) und an ihrer Hochdruckseite (P_{SYSTEM}) positioniert ist, wobei die starre Vorderplatte (122) im wesentlichen den gleichen Innendurchmesser hat wie die flexible ringförmige Vorderplatte (124) und nahe genug an der flexiblen ringförmigen Vorderplatte (124) positioniert ist, um dieser Schutz zu bieten.

14. Bürstendichtungsvorrichtung (62) nach Anspruch 1, wobei die vertiefte Fläche (80, 110) dazu dient, einen Hystereseeffekt auf die Hinterplatte (74, 112) zu verringem, und die flexible ringförmige Vorderplatte (60) dazu dient, Druckverschluss der Borsten (64) zu verringern.

15. Bürstendichtungsvorrichtung (62) nach Anspruch 1, wobei die vertiefte Fläche (80) im wesentlichen plan ist.

16. Bürstendichtungsvorrichtung (62) nach Anspruch 1, wobei die vertiefte Fläche (110) so konturiert ist, dass die Tiefe (h) in Richtung eines Innenumfangsrandes der Rückplatte (112) zunimmt.

## Revendications

1. Dispositif de joint à brosse (62) pour isoler de façon étanche une région de haute pression (P_{SYSTCME}) par rapport à une région de basse pression (P_{DECHARGE}), le dispositif de joint à brosse (62) incluant une pluralité de soies (64) disposées de façon annulaire et une plaque arrière annulaire (74) positionnée de manière concentrique aux soies (64), et sur le côté de basse pression (P_{DECHARGE}) de celles-ci, la plaque arrière (74) ayant une surface en creux (80) adaptée à retarder le contact des soies (64) avec la plaque arrière (74) lors de l'application d'une pression sur un côté du dispositif de joint (62), **caractérisé par** :
une plaque avant annulaire flexible (60) positionnée de manière coacentrique auxdites soies (64) et suffisamment proche desdites soies (64), sur le côté de haute pression (P_{SYSTEME}), pour réduire l'écoulement de fluide à travers lesdites soies (64).

2. Dispositif de joint à brosse (62) selon la revendication 1, dans lequel ladite plaque avant flexible (92, 100) définit une pluralité de doigts (94, 104).

3. Dispositif de joint à brosse (62) selon la revendication 2, dans lequel la souplesse latérale de chacun desdits doigts (94, 104) est supérieure à la souplesse latérale d'une section de soies (64) adjacente audit doigt (94, 104) considéré.

4. Dispositif de joint à brosse (62) selon la revendication 2, dans lequel lesdits doigts (94, 104) sont ménagés par des fentes (96, 102) s'étendant depuis le bord périphérique intérieur de ladite plaque avant flexible (92, 100).

5. Dispositif de joint à brosse (62) selon la revendication 2, dans lequel lesdites soies (64) s'étendent avec un angle par rapport à une direction radiale.

6. Dispositif de joint à brosse (62) selon la revendication 2, dans lequel lesdits doigts (94, 104) s'étendent radialement vers l'intérieur de ladite plaque avant annulaire flexible (92, 100).

7. Dispositif de joint à brosse (62) selon la revendication 2, dans lequel lesdits doigts (104) s'étendent vers l'intérieur de ladite plaque avant annulaire (100) avec un angle par rapport à une direction radiale.

8. Dispositif de joint à brosse (62) selon la revendication 7, dans lequel ledit angle est compris entre + / - 75 degrés, un angle positif désignant la même direction que les soies (64) et un angle négatif désignant la direction opposée aux soies (64).

9. Dispositif de joint à brosse (62) selon la revendication 8, dans lequel. ledit angle est approximativement de 0°.

10. Dispositif de joint à brosse (62) selon la revendication 4, dans lequel lesdites fentes (96, 102) ont une largeur dans la gamme de 0,1016 à 0,3048 mm (4 à 12 millièmes de pouce).

11. Dispositif de joint à brosse (62) selon la revendication 4, dans lequel lesdits doigts (94, 104) ont une épaisseur dans la gamme de 0,0762 à 0,508 mm (3 à 20 millièmes de pouce).

12. Dispositif de joint à brosse (62) selon la revendication 11, dans lequel lesdits doigts (94, 104) ont une épaisseur dans la gamme de 0,1016 à 0,1778 mm (4 à 7 millièmes de pouce).

13. Dispositif de joint à brosse (62) selon la revendication 1, dans lequel ledit dispositif de joint (62) inclut une plaque avant annulaire rigide (122) positionnée de façon concentrique à la plaque avant annulaire flexible (124) et sur le côté de haute pression (P_{SYSTEME}) de cette dernière, ladite plaque avant rigide (122) ayant sensiblement le même diamètre intérieur que ladite plaque avant annulaire flexible (124) et étant positionnée suffisamment proche de ladite plaque avant annulaire flexible (124) pour assurer une certaine protection à celle-ci.

14. Dispositif de joint à brosse (62) selon la revendication 1, dans lequel ladite surface en creux (80, 110) sert à réduire un effet d'hystérésis sur ladite plaque arrière (74, 112) et ladite plaque avant annulaire flexible (60) sert à réduire un effet de fermeture par la pression desdites soies (64).

15. Dispositif de joint à brosse (62) selon la revendication 1, dans lequel la surface en creux (80) est sensiblement plane.

16. Dispositif de joint à brosse (62) selon la revendication 1, dans lequel la surface en creux (110) est profilée pour augmenter de profondeur (h) vers un bord périphérique intérieur de ladite plaque arrière (112).
